# EUROPEAN PATENT APPLICATION

(11) **EP 2 221 604 A1**
(43) Date of publication of application: **25.08.2010**
(21) Application number: 09002343.3
(22) Date of filing: 19.02.2009
(51) Int. Cl.: G01N 21/53, G01N 21/85, A47L 15/42, D06F 39/00

(54) **Turbidity sensor**

(71) Applicant: Electrolux Home Products Corporation N.V., 1930 Zaventem (BE)
(72) Inventor: Pimputkar, Girish, 11221 Stockholm (SE); Pers, Per-Erik, 79233 Mora (SE)
(74) Representative: Samzelius, Roger Mikael

(57) **Abstract**

A dishwasher (1) is disclosed. The dishwasher (1) comprises a turbidity sensor (13) for measuring the turbidity of a fluid contained in the dishwasher (1). According to one embodiment, the turbidity sensor (13) comprises a light-emitting portion comprising a light source for emitting light, and a light-receiving portion for receiving light emitted from the light source. The light-emitting portion and the light- receiving portion are positioned with respect to each other so that, when the light-emitting portion is in operation, light emitted from the light-emitting portion propagates through the washing fluid on its way to the light-receiving portion. Furthermore, the light-emitting portion comprises a light-diverging means positioned with respect to the light source to effect diverging of light, emitted from the light source, such that a beam angle of emitted light from the light-emitting portion is less than or equal to 45°.

## Description

### TECHNICAL FIELD

The present invention generally relates to a turbidity sensor. More particularly, the present invention concerns a turbidity sensor for a machine for washing articles, e.g., a dishwasher or a washing machine.

### RELATED ART

Today, appliances or machines for washing articles, such as dishwashers or washing machines, may be equipped with turbidity sensors for measuring the turbidity of the washing fluid.

In dishwashers or washing machines, which utilize turbidity sensors for optimizing the washing cycle the problem may arise that dirt particles suspended in the wash fluid as well as foam and air bubbles caused by food residue may move through the measuring path of the turbidity sensor. Generally speaking, today's turbidity sensors are sensible to the above-mentioned air bubbles. This may reduce the reliability of the turbidity sensor signal delivered from the turbidity sensor, because the generated air bubbles usually also contribute to the increased turbidity sensed by the turbidity sensor and, as a consequence, clean liquid medium could erroneously be interpreted as dirty liquid medium even if it is actually clean. In turn, this could lead to wasteful water and energy consumption, as the washing cycle would continue despite the fact that the liquid medium is clean.

To prevent this problem, it has been proposed by some dishwasher manufacturers to move the wash fluid within the measuring zone of the turbidity sensor at a dampened flow, e.g., by reducing the flow rate or by temporarily stopping the fluid circulation for a few seconds to allow the air bubbles to disappear before reading out the turbity sensor signal delivered from the turbidity sensor. However, this solution may inhibit the capability to perform continous, e.g. uninterrupted over time, measurements. Oftentimes, continous measurements througout the washing process of the machine is of much interest, because with such contionous measurements it is possible to control the washing cycle of the machine at any give time in dependence of the continously performed turbidity measurements (rather than at pre-defined time intervals). Moreover, the motor for driving the circulation pump of the machine risk to be worn out due to the frequent speed changes that are important or even necessary in order to cause the dampening effect of the flow of the wash fluid.

### SUMMARY OF THE INVENTION

It is with respect to the above considerations and others that the present invention has been made. The present invention seeks to mitigate, alleviate or eliminate one or more of the above-mentioned deficiences and disadvantages singly or in combination. In particular, it would be desirable to achieve an improved turbidity sensor, e.g. improved in terms of reliability. It would also be desirable to achieve an improved turbidity sensor, which allows for continuous measurements with maintained reliability. It would be advantageous to achieve an improved turbidity sensor, which allows for continuous measurements with maintained reliability without having to utlize a low rate of the circulation of the liquid medium, or wash fluid, through the machine for washing articles.

To better address one or more of these concerns a turbidity sensor having the features defined in the independent claim 1 is provided. Embodiments of the present invention are defined in the claims, which refer to claim 1.

In accordance with a first aspect of the invention, there is provided a turbidity sensor for measuring the turbidity of a fluid contained in a machine for washing articles, the turbidity sensor comprising a light-emitting portion comprising a light source for emitting light, wherein the light-emitting portion further comprises a light-diverging means positioned with respect to the light source to effect diverging of light, emitted from the light source, such that a beam angle of emitted light from the light-emitting portion is less than or equal to 45°.

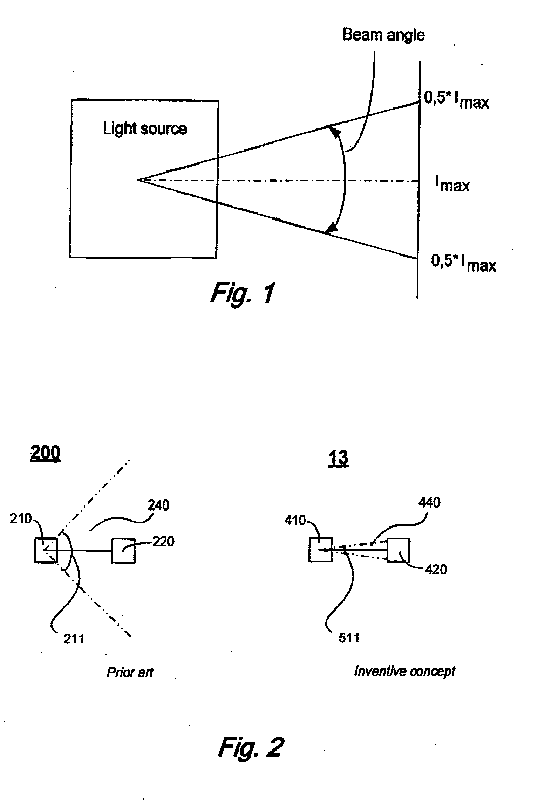

As used herein, the expression beam angle is used to mean the angle between the two directions for which the intensity is 50 percent of the maximum intensity *lₘₐₓ* as measured in a plane through the nominal light beam center line, see FIG. 1.

The turbidity sensor may additionally comprise a light- receiving portion for receiving light emitted from the light source, wherein the light-emitting portion and the light- receiving portion are positioned with respect to each other so that, when the light-emitting portion is in operation, light emitted from the light-emitting portion propagates through the fluid on its way to the light-receiving portion.

In a preferred embodiment, the light-diverging means is positioned with respect to the light source to effect diverging of light, emitted from the light source, such that a beam angle of emitted light from the light-emitting portion is in the range of 5-15°. For example, the beam angle may advantageously be about 8°, 9°, 10°, 11°, 12° or 13°.

According to one embodiment, the light-diverging means comprises a lens with a concave shape.

According to one embodiment, the lens has a diameter that is larger than or equal to 3 mm.

According to a preferred embodiment, the lens has a diameter that is in the range of 3-8 mm.

According to an advantageous embodiment, the lens has a diameter that is about 5 mm.

In one embodiment, the turbidity sensor further comprises a light-sensitive element for receiving light emitted from the light-emitting portion, wherein the light-emitting portion and the light-sensitive element are positioned with respect to each other so that, when the light-emitting portion is in operation, light emitted from the light-emitting portion propagates through the fluid on its way to the light-sensitive element, and wherein the light-sensitive element has a diameter that is larger than or equal to 3 mm.

In one embodiment, the turbidity sensor further comprises a light-sensitive element for receiving light emitted from the light-emitting portion, wherein the light-emitting portion and the light-sensitive element are positioned with respect to each other so that, when the light-emitting portion is in operation, light emitted from the light-emitting portion propagates through the fluid on its way to the light-sensitive element, and wherein the light-sensitive element has a diameter that is in the range of 3-8 mm.

In one embodiment, the turbidity sensor further comprises a light-sensitive element for receiving light emitted from the light-emitting portion, wherein the light-emitting portion and the light-sensitive element are positioned with respect to each other so that, when the light-emitting portion is in operation, light emitted from the light-emitting portion propagates through the fluid on its way to the light-sensitive element, and wherein the light-sensitive element has a diameter that is about 5 mm.

According to one embodiment, the light-sensitive element is part of a light-receiving portion. That is, the light-receiving portion comprises the light-sensitive element.

Suitably, but not necessarily, the light-sensitive element is one from a group comprising: a phototransistor, a photodiode, and a photoresistor.

Suitably, but not necessarily, the light source is a solid-state lighting device, such as a light-emitting diode (LED).

Various embodiments of the present invention are based on the inventors' realization that a light-emitting portion with a relatively small beam angle of emitted light, such as a beam angle within the above-mentioned range of 5-15°, will minimize or at least reduce the size of the light transmission/reception path in the measuring zone of the hydraulic path of a machine for washing articles. In today's washing machines, the manufactures generally use turbidity sensors available on the market, which turbidity sensors consist of a SMD (Surface Mounted LED) for emitting the light. The SMD's available on the market, and which are used in today's washing machines, generally have beam angles of emitted light in the range of 50-165°. This implies a comparatively much larger size of the light transmission/reception path for the turbidity sensor, as is illustrated in FIG. 2.

To illustrate this, FIG. 2 shows an exemplary turbidity sensor 200 according to the prior art on the left-hand side. The disclosed turbidity sensor 200 comprises a SMD 210 for emitting light and a light-sensitive element 220 for receiving light emitted from the SMD 210. The SMD 210 and the light-sensitive element 220 are positioned with respect to each other so that, when the SMD 210 is in operation, light emitted from the SMD 210 can propagate through the fluid on its way to light-sensitive element 220. As discussed above, the SMD is arranged with a beam angle 211 of the emitted light which is in the range of 50-165°. This yields a relatively large size of the light transmission/reception path 240.

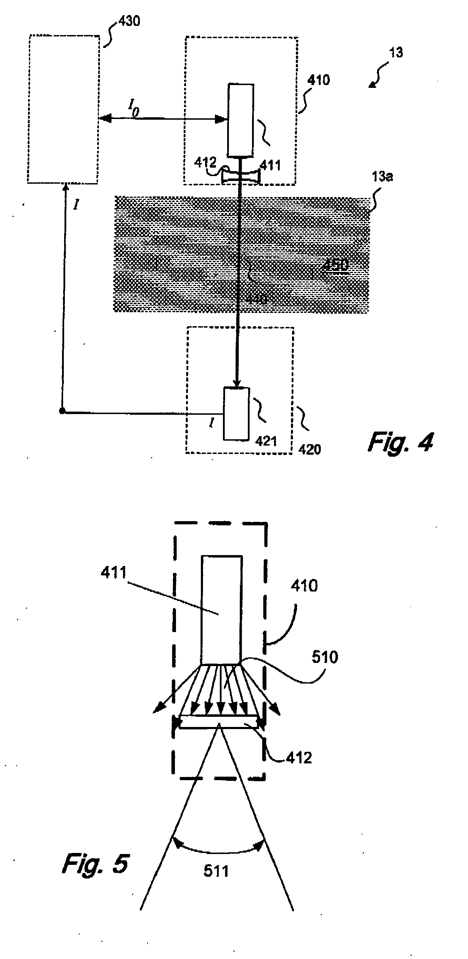

In contrast, according to the inventive concept described herein, see e.g. the right-hand side of FIG. 2, the turbidity sensor 13 according to various embodiments of the invention comprises a light-emitting portion 410 (see also Figs. 4 and 5) including a light source (not shown in Fig. 2). The light-emitting portion 410 further comprises a light-diverging means (not shown in Fig. 2) positioned with respect to the light source to effect diverging of light, emitted from the light source, such that a beam angle 511 (see also FIG. 5) of emitted light from the light-emitting portion 410 is less than or equal to 45°, and advantageously in the range of 5-15°. As can be seen in FIG. 2, this yields a narrower size, or width, of the light transmission/reception path 440 as compared to the light transmission/reception path 240 of the prior art turbidity sensor 200.

The inventors have realized that the relatively large light transmission/reception path of today's turbidity sensors can contribute to the relatively poor reliability of the turbidity sensor signal, because the larger the light transmission/reception path is the greater is the likelihood that a unnecessarily large amount of light will be either blocked or scattered due to the air bubbles being present in the light transmission/reception path. Thus, by reducing the size of the beam angle in accordance with the inventive concept, it is possible to reduce the size of the light transmission/reception path. As a result, the likelihood that an unnecessarily large amount of light will be either blocked or scattered due to the air bubbles being present in the light transmission/reception path will decrease.

At the time this invention was made, persons skilled in the art were focusing and preoccupied with the improvement of beam angles of the SMD's working in the range from about 50° and to approximately 165°.Despite these prevalent currents in this technical field, the inventors of the present invention suggest a beam angle which is relatively far removed from the previously used range of 50-165° and which is, furthermore, purposively selected to advantageously be in the range of 5-15°, in order to reduce the size of the light transmission/reception path.

Furthermore, various embodiments of the present invention are based on the inventors' realization that having a light-diverging means e.g. in the form of a lens with a diameter size of approximately 3 millimeters (or more) will mean that the light distribution pattern emitted from the light-emitting portion is sufficiently larger than the largest air bubbles generated during the washing process. Although the size of the bubbles may vary, it has been verified through experiments that a lens diameter of about 3 (or more) millimeters is sufficient to eliminate or at least reduce the light scattering effect or light blocking effect caused by the air bubbles. With the above-mentioned size of the lens, enough light can propagate from the tight-emitting portion through the liquid medium, or fluid, to the receiving light-receiving portion even though there is an air bubble present in the light transmission/reception path. In contrast, today's turbidity sensor that are used in washing machines available on the market utilize the above-mentioned SMD's, which have sizes which are generally smaller than the bubble size, whereby the air bubbles contribute to light scattering and/or light blocking effect(s). At the time this invention was made, there was a general ambition among persons skilled in the art to continue the miniaturization of components and to minimize the numbers of components in order to save costs, thus leading to smaller and smaller SMDs (without additional components such as light-diverging means and the like). Despite these prevalent currents, the inventors of the present invention suggest, in combination with a relatively small beam angle of the light distribution pattern from the light-emitting portion, having an additional component, e.g. in the form of a concave lens, positioned at or nearby the light source and which has a diameter size which is 3 mm or larger and is, accordingly, larger than air bubbles in order to improve the turbidity sensor even further. Thus, the inventors suggest adding additional components and making these components somewhat larger than what is common today, which is contrary to the general prevalent current among persons skilled in the art who are generally searching for further miniaturization.

Also, a light-sensitive element may have a similar size, i.e. a diameter size of approximately 3 millimeters (or more). This will mean that the light-sensitive area (i.e. reception area) of the light-sensitive element is sufficiently larger than the largest air bubbles generated during the washing process. Although the size of the bubbles may vary, it has been verified through experiments that a diameter of about 3 (or more) millimeters of the light-sensitive element is sufficient to eliminate or at least reduce the light scattering effect or light blocking effect caused by the air bubbles. With the above-mentioned size of the light-sensitive area, enough light can propagate from the light-emitting portion through the liquid medium, or fluid, to the receiving light-sensitive element even though there is an air bubble present in the light transmission/reception path.

The turbidity sensor according to various embodiments of this invention is relatively simple and, accordingly, inexpensive. Yet further, because the negative effect of air bubbles in turbidity measurements can be reduced by minimizing or reducing the size of the light transmission/reception path, the turbidity sensor according to various embodiments allows for continuous measurements with maintained reliability without having to utilize low rate of the circulation of the liquid medium through the machine for washing articles.

According to a second aspect of the invention, there is provided a machine for washing articles, wherein the machine comprises a turbidity sensor according to the first aspect of the invention.

The machine for washing articles may be a dishwasher.

The machine for washing articles may be a washing machine.

Generally, the second aspect of the invention may exhibit the same advantages and features as the first aspect of the invention.

These and other aspects of the invention will be apparent from and elucidated with reference to the illustrative embodiments described hereinafter.

Generally, all terms used herein are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

### BRIEF DESCRIPTION OF THE DRAWINGS

Embodiments of the present invention will now be described in more detail, reference being made to the enclosed drawings, in which:
FIG. 1 illustratively shows a beam angle;
FIG. 2 illustratively shows light transmission/reception paths in dependence of the size of a beam angle;
FIG. 3 is a cross-sectional view of a dishwasher being provided with a turbidity sensor in the fluid circulation system for detecting the degree of contamination of the fluid;
FIG. 4 is a block diagram of a turbidity sensor according to an embodiment of the invention; and
FIG. 5 is a block diagram illustrating the light-emitting portion of the turbidity sensor of FIG. 4 in enlargement.

### DETAILED DESCRIPTION OF EMBODIMENTS

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Furthermore, like numbers refer to like elements throughout.

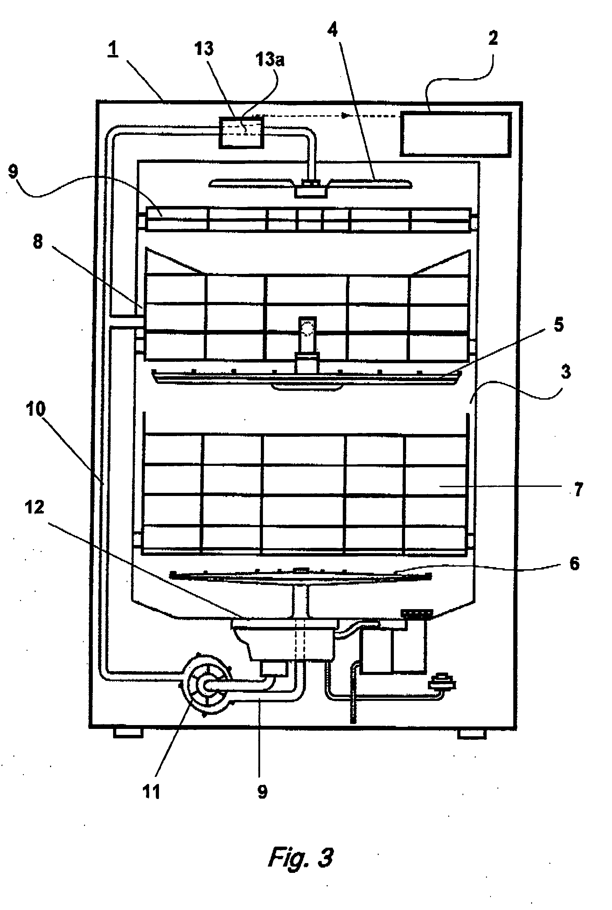

To illustrate the turbidity sensor according to the various embodiments of the present invention, these embodiments of the present invention will be described in connection with a dishwasher 1, which is illustrated in FIG. 3. The embodiments of the invention should not be construed as limited for use in dishwashers. Rather, the turbidity sensor according to these embodiments could equally possible be utilized in any machine in which it is useful or even necessary to measure the turbidity of a fluid, e.g. in washing machines for washing clothes.

The disclosed embodiment of the dishwasher 1 may advantageously be an electronically controlled dishwasher. Dishwashers of this type are known in the art and may include the components indicated in simplified form in the dishwasher 1. The manually or automatically selectable dish washing program of the dishwasher 1 may comprise washing programs, such as pre-wash, main wash, intermediate wash and rinse. Depending upon the detected/sensed state of soiling of the dishes loaded into the dishwasher 1, the pre-wash and intermediate wash may either be eliminated or added to the dishwashing cycle. The rinse step is usually followed by a final drying step for drying the dishes before these dishes are off-loaded from the dishwasher 1. The program control module 2 for controlling the dishwasher 1 is shown for illustrative purposes only. A detailed rendition of this module 2 is not necessary for explaining the principles of the present invention.

The dishwasher 1 is provided with a chamber 3 and one or several wash arms 4, 5, 6 preferably arranged in different planes in the chamber 3 above and between dish racks 7, 8 and above an optional separate basket 9 for knives, spoons and forks. The wash arms 4, 5,6 are supplied with circulating wash fluid, such as fresh water, by way of associated feed lines 9, 10 from a circulating pump 11, which may be driven by a motor (not shown). During a washing operation the wash fluid is normally fed through a filter device 12 including, e.g., one or several filters located at the bottom of the chamber 3. The filter device 12 is configured to filter any food residue out of the wash fluid.

The wash fluid fed from a fluid supplying connection 13 to the chamber 3 for the washing of dishes should preferably, but not necessarily, be controlled from the quantity of dishware to be washed. The quantity and/or changes of fluid supplied during a washing cycle may also depend upon the degree of soiling of the dishes. In particular, wash fluid contaminations caused by 'hard to dissolve'-dirt particles in the wash fluid, may negatively affect the result of the wash.

The disclosed dishwasher 1 is provided with a turbidity sensor 13, which will be decribed in further detail hereinafter. The turbidity sensor 13 is advantageously connected to the program control 2 and is configured to detect the turbidity of the wash fluid at predetermined points in time, or more preferably continously, during the previously mentioned program steps. For instance, the measurement could be done after the wash fluid has been fed into the chamber 3. Upon sensing turbidity of the wash fluid, the turbidity sensor 13 is configured to output a measurement signal corresponding to the degree of contamination. To this end, the turbidity sensor 13, which may comprise a light-emitting portion as well as a light-receiving portion, is disposed within a measuring zone 13a through which the wash fluid (see also FIG. 4) is fed at a flow to be examined for any contamination.

The turbidity sensor 13 can be disposed in the feed conduit 10 of the upper wash arm 4, as illustrated in FIG. 3. In order to ensure differentiation of air bubbles which may be present in the circulating wash fluid and prevent them from being erroneously detected as dirt particles, the measuring zone 13a and the turbidity sensor 13 may advantageously be disposed in a horizontally extending portion of the wash arm feed conduit 10 As the reader will understand, the measuring zone 13a may alternatively be installed in the feed conduit of one of the other wash arms 5 or 6. Alternatively, it could be advantageous to place the measuring zone 13a in a by-pass branch or a parallel side branch leading to one of the feed conduits 9 or 10 of a wash arm, in which only a small portion of the entire wash fluid flows at a comparatively slower apeed. In principle, the measuring zone 13a could be arranged at any location of the wash fluid conduit 9, 10. For example, it could be located near the circulation pump 11. It should be appreciated that the exact location of the turbidity sensor 13 depends on the specific dishwasher design and should, accordingly, be tested and evaluated in each specific case. Still further, it should be appreciated that the dishwasher 1 could be equipped with more than one, i.e. a plurality, of turbidity sensors 13 in order to measure the turbidity of the wash fluid at various positions, such as at one or more of the above-mentioned possible positions.

FIG. 4 illustratively shows a turbidity sensor 13 in accordance with an exemplary embodiment of the invention. The turbidity sensor according to this exemplary embodiment, which is here represented in block-diagram form, comprises a light-emitting portion 410 having a light source 411 for emitting light. The turbidity sensor may additional comprise a light-receiving portion 420 for receiving light from the light-emitting portion 410.

In the disclosed embodiment, the light-emitting 410 and light-receiving 420 portions are so positioned that light emitted by the former, at least for the major part, can propagate through the fluid 450 of the measuring zone 13a to reach the latter. Additionally, the turbidity sensor could optionally include a processing and controlling portion 430 electronically connected to the light-emitting portion 410 and the light-receiving portion 420, respectively. For example, the processing and controlling portion 430 could be utilized for controlling the radiant intensity of light generated by the light-emitting portion 410 in dependence of the radiant intensity of light measured or detected by the light-receiving portion 420 and further to determine a turbidity value on the basis of the intensities of the emitted and received light, respectively.

Furthermore, it should be appreciated that the sensor 13 may further be electronically connected to a power supply section, and optionally a clock and similar auxiliary components. However, these and other components have been intentionally omitted from the drawings, since they are not necessary for explaining the principle of the invention and their addition is considered to belong to the general knowledge of the person skilled in the art.

In the disclosed embodiment, the light-emitting portion 410 comprises a light source 411 and a light-diverging means 412, which will be further described in more detail hereinafter. The light source 411 may comprise a light-emitting surface for emitting light. The light source 411 may be subject to certain requirements regarding dimensions, reliability and power consumption, and can advantageously be realised as a solid-state light source, such as a light-emitting diode (LED). The LED may have a diameter size of e.g. 5 mm. The light emitted by the tight-emitting surface of the light source 311, at a radiant intensity *I*₀, may propagate along an optical path (a.k.a. the light transmission/reception path) 440, a portion of which intersects the fluid of the measuring zone 13a, and the light is eventually received by the light-receiving portion 420. Due to attenuation and scattering, the light beam may exit the fluid of the measuring zone 13a with intensity *I*, which may be comparatively lower than the radiant intensity *I*₀ of the emitted light.

Still with reference to the embodiment disclosed in FIG. 4, the light-receiving portion 420 may comprise a light-sensitive element 421, which comprises a light-incident surface for receiving light emitted from the light source 411. According to one embodiment of the invention, the light-sensitive element, e.g. the light-incident surface, has a diameter that is larger than or equal to 3 mm. Suitably, the diameter is in the range of 3-8 mm. Advantageously, the diameter is approximately 5mm. As discussed hereinabove, this implies that the light-sensitive area (light-incident surface) of the light-sensitive element is sufficiently larger than the largest air bubbles generated during the washing process. In turn, this can be sufficient to eliminate or at least reduce the light scattering effect or light blocking effect caused by any air bubbles. With the above-mentioned size of the light-sensitive area, enough light can propagate from the light-emitting portion through the liquid medium, or fluid, to the receiving light-sensitive element even though there is an air bubble present in the light transmission/reception path.

The light-sensitive element 420 may suitably be a phototransistor for receiving light in a wavelength range that is compatible with the light source 411. The light-sensistive element 421 may be a phototransistor, a photodiode or a photoresistor. Phototransistors and photodiodes are both capable of emitting a voltage responsive to the radiant intensity of light impinging on the light-incident surface. The resistance of a photoresistor may vary in dependence of the intensity of light impinging on the light-incident surface of the photoresistor. Hence, these components are suitable for measuring the radiant intensity of received light. A signal that encodes the radiant intensity of the received light *I* can then be provided to a processor 430, if the turbidity sensor 13 includes such a processor 430.

FIG. 5 illustrates light-emitting portion 410 in enlargement. According to the embodiments of the present invention, the light-emitting portion further comprises a light-diverging means 412 positioned with respect to the light source 411 to effect diverging the beam of light 510, emitted from the light source 411, such that a resulting beam angle 511 of emitted light leaving out from the light-emitting portion 410 is less than or equal to 45°. The light-diverging means 412 may e.g. be positioned with respect to the light source 411 to effect diverging of light 510, emitted from the light source 411, such that a beam angle 511 of emitted light from the light-emitting portion 410 is in the range of 5-15°, suitably approximately 12°. Furthermore, the light-diverging means 412 may comprise a concave lens.

Having a light-emitting portion 410 which is configured to emit light with a beam angle 511 of this relatively small size can minimize or at least reduce the size, or better width, of the light transmission/reception path 440. This has the effect that the likelihood that an unnecessarily large amount of light will be either blocked or scattered due to air bubbles being present along the light transmission/reception path 440 will be minimized or at least reduced. Thus, the scattering effect and/or blocking effect of any air bubbles generated in the machine during operation can be reduced and, hence, the reliability of the turbidity sensor 13 can be improved as compared to today's existing turbidity sensors.

Yet further, according to one embodiment of the invention the light-diverging means 412 comprises a concave lens with a lens diameter of 3 mm or more, preferably in the range of 3-8 mm, and advantageously about 5 mm. Having a diameter of this size implies that surface of the lens becomes sufficiently larger than the largest air bubbles generated during the washing process. Although the size of the bubbles may vary, it has been verified through experiments that a lens diameter with a length of about 3 (or more) millimeters is sufficient to eliminate or at least reduce the light scattering effect or light blocking effect caused by the air bubbles. It has been verified in experiments that, with the above-mentioned length of the lens diameter, enough light can propagate from the light-emitting portion 410 through the liquid medium, or fluid, to the receiving light-sensitive element 421 of the light-receiving portion even in the event there is an air bubble present in the path 440 of the measuring zone 13a.

While the invention has been illustrated and described in detail in the drawings and foregoing description, such illustration and description are to be considered illustrative or exemplary and not restrictive; the invention is not limited to the disclosed embodiment. Other variations to the disclosed embodiments can be understood and effected by those skilled in the art in practicing the claimed invention, from a study of the drawings, the disclosure, and the appended claims. The mere fact that certain measures are recited in mutually different dependent claims does not indicate that a combination of these measured cannot be used to advantage. Any reference signs in the claims should not be construed as limiting the scope.

## Claims

1. A turbidity sensor (13) for measuring the turbidity of a fluid (450) contained in a machine (1) for washing articles, the turbidity sensor (13) comprising:
a light-emitting portion (410) comprising a light source (411) for emitting light, **characterized in that**
the tight-emitting portion (410) further comprises a light-diverging means (412) positioned with respect to the light source (411) to effect diverging of light, emitted from the light source (411), such that a beam angle of emitted light from the light-emitting portion (410) is less than or equal to 45°.

2. The turbidity sensor (13) according to claim 1, wherein the light-diverging means (412) is positioned with respect to the light source (411) to effect diverging of light, emitted from the light source (411), such that a beam angle of emitted light from the light-emitting portion (410) is in the range of 5-15°.

3. The turbidity sensor (13) according to claim 1 or 2, wherein the tight-diverging means (412) comprises a lens with a concave shape.

4. The turbidity sensor (13) according to claim 3, wherein the lens (412) has a diameter that is larger than or equal to 3 mm.

5. The turbidity sensor (13) according to claim 3, wherein the lens (412) has a diameter that is in the range of 3-8 mm.

6. The turbidity sensor (13) according to claim 3, wherein the lens (412) has a diameter that is about 5 mm.

7. The turbidity sensor (13) according to any one of the claims 1-6, further comprising a light-sensitive element (421) for receiving light emitted from the light-emitting portion (410), wherein the light-emitting portion (410) and the light-sensitive element (421) are positioned with respect to each other so that, when the light-emitting portion (410) is in operation, light emitted from the light-emitting portion (410) propagates through the fluid (450) on its way to the light-sensitive element (421), and wherein the light-sensitive element (421) has a diameter that is larger than or equal to 3 mm.

8. The turbidity sensor (13) according to any one of the claims **1-6,** further comprising a light-sensitive element (421) for receiving light emitted from the light-emitting portion (410), wherein the light-emitting portion (410) and the light-sensitive element (421) are positioned with respect to each other so that, when the light-emitting portion (410) is in operation, light emitted from the light-emitting portion (410) propagates through the fluid (450) on its way to the light-sensitive element (421), and wherein the light-sensitive element (421) has a diameter that is in the range of 3-8 mm.

9. The turbidity sensor (13) according to any one of the claims **1-6,** further comprising a light-sensitive element (421) for receiving light emitted from the light-emitting portion (410), wherein the light-emitting portion (410) and the light-sensitive element (421) are positioned with respect to each other so that, when the light-emitting portion (410) is in operation, light emitted from the light-emitting portion (410) propagates through the fluid (450) on its way to the light-sensitive element (421), and wherein the light-sensitive element (421) has a diameter that is about 5 mm.

10. A machine (1) for washing articles, wherein the machine comprises a turbidity sensor (13) according to any of the preceding claims.

11. A machine (1) for washing articles according to claim **10**, wherein the machine is a dishwasher.

12. A machine (1) for washing articles according to claim **10**, wherein the machine is a washing machine.
